# EUROPÄISCHE PATENTSCHRIFT

(11) **EP 3 109 529 B1**
(45) Veröffentlichungstag und Bekanntmachung des Hinweises auf die Patenterteilung: **17.01.2018**
(21) Anmeldenummer: 15174159.2
(22) Anmeldetag: 26.06.2015
(51) Int. Cl.: F16K 31/60, F16K 31/06

(54) **HANDNOTBETÄTIGUNG FÜR EIN HYDRAULIKVENTIL**
MANUAL EMERGENCY ACTUATION FOR A HYDRAULIC VALVE
COMMANDE MANUELLE D'URGENCE POUR VANNE HYDRAULIQUE

(43) Veröffentlichungstag der Anmeldung: 28.12.2016
(73) Patentinhaber: HAWE Hydraulik SE, 81673 München (DE)
(72) Erfinder: Manhart, Anton, 84405 Dorfen (DE); Weber, Kilian, 81539 München (DE); Heusser, Martin, 81245 München (DE); Schwerdtfeger, Axel, 85232 Günding (DE)
(74) Vertreter: Grosse Schumacher Knauer von Hirschhausen

(56) Entgegenhaltungen:
- EP-A1- 2 743 549
- CN-U- 203 880 194
- US-A- 2 932 978

## Beschreibung

Die vorliegende Erfindung betrifft eine Handnotbetätigung für ein Hydraulikventil und ein Hydraulikventil mit einer entsprechenden Handnotbetätigung.

In Hydraulikventilen, wie z.B. Schieberventile für die Hochdruckhydraulik, Mobilhydraulik oder Staplerhydraulik, wird beispielsweise eine bestimmte maximale Durchflussmenge an Druckmittel entsprechend einer bestimmten Maximalgeschwindigkeit eines Hydroverbrauchers durch eine im Hydraulikventil angeordnete Schieberkomponente vorgegeben bzw. geändert. Aus sicherheitstechnischen Gründen sind dabei Handnoteinrichtungen vorzusehen, die bei einem Kabelbruch oder Stromausfall eine z.B. über das Schieberventil angehobene und gehaltene Last von Hand absenken lassen, ggf. mit einer vorbestimmten Geschwindigkeit. Häufig sind die hierzu eingesetzten Hydraulikventile durch Magnete betätigbare Schieberventile, bei denen ein Betätigungsglied der Handnoteinrichtung entweder stets oder nach Abnehmen einer Kappe zur Nutzung der Handnoteinrichtung zugänglich ist.

Weiterhin sind Betätigungsmagnete für Schieberventile erhältlich, die außen zugänglich sowohl eine Handnoteinrichtung, als auch eine mittels eines Gewindestifts schraubverstellbare Hubbegrenzungseinrichtung aufweisen. Eine Nutzung der Hubbegrenzungseinrichtung ist beispielsweise dann erforderlich, wenn ein Endverbraucher für einen über das Schieberventil betriebenen Hydroverbraucher eine niedrigere Maximalgeschwindigkeit bei Nenndruck benötigt, als durch eine maximale Menge entsprechend der Spezifikation oder des Typs des Schieberventils festgelegt ist. In diesem Fall wird z.B. der Gewindestift im Betrieb des Hydroverbrauchers eingeschraubt und die vom Schieberventil gesteuerte Menge so allmählich reduziert, dass eine gewünschte maximal zulässige Geschwindigkeit erreicht wird, die einer bestimmten Einschraubstellung des Gewindestifts entspricht.

Ein bekanntes Schieberventil mit Handnotbetätigung ist z.B. aus der europäischen Patentanmeldung EP 2 743 549 A1 bekannt. Hierbei ist für die Handnotbetätigung eine abnehmbare Kappe vorgesehen, bei der die Kappe über einem Gewindestift verschraubt ist, und wobei der Gewindestift zum Abnehmen der Kappe und damit zum Freilegen eines Betätigungsglieds der Handnotbetätigung abzunehmen ist. Weitere gattungsgemäße Ventile werden aus CN 203 880 194 U und US 2 932 978 A bekannt. Angesichts des oben beschriebenen Standes der Technik ist es wünschenswert, eine Handnotbetätigung für ein Hydraulikventil und ein Schieberventil bereitzustellen, bei dem die Handnotbetätigung auf einfache und rasche Weise betätigt werden kann.

In einem ersten Aspekt wird eine Handnotbetätigung für ein Hydraulikventil bereitgestellt, das bei Betätigung eine Verstellung des Hydraulikventils in einen vorbestimmten Ventilzustand bewirkt, wobei die Handnotbetätigung ein Hubbegrenzungsmittel für das Hydraulikventil und ein Betätigungselement umfasst, das bei Betätigung auf das Hubbegrenzungsmittel eine verstellende Kraft ausübt. Die Handnotbetätigung umfasst ferner einen Handhebel, an dem das Betätigungselement angebracht ist.

Durch das an einem Handhebel angebrachte Betätigungselement wird eine allseits einsatzbereite und leicht zu bedienende Handnotbetätigung bereitgestellt, bei der die Handnotbetätigung direkt durch Betätigen des Handhebels wirksam bedient werden kann. Weiterhin erlaubt der Handhebel eine zuverlässige Bedienung der Handnotbetätigung ohne großen Kraftaufwand, wobei aufgrund des Handhebels eine sichere Bedienung der Handnotbetätigung ermöglicht wird, da nicht erst ein separates Werkzeug mit einem Betätigungselement einer Handnotbetätigung in Eingriff zu bringen ist.

In einer anschaulichen Ausführungsform umfasst das Betätigungselement einen Gewindestift, der an dem Handhebel lösbar angebracht ist und durch den eine Position des Hubbegrenzungselements in der Handnotbetätigung vorgegeben werden kann. Dadurch wird eine benutzerdefinierte Einstellung der Hubbegrenzung eines Hydraulikventils ermöglicht, so dass z.B. eine Maximalgeschwindigkeit für einen an das Hydraulikventil angeschlossenen Endverbraucher zuverlässig festgelegt werden kann.

In einer weiteren anschaulichen Ausführungsform ist der Handhebel durch einen Blechbügel und einen Handgriff gebildet, wobei sich der Blechbügel wenigstens teilweise entlang dem Handgriff in Richtung einer Hebellänge des Handhebels erstreckt. Dies erlaubt zum einen die Bereitstellung eines federnden Elements, das für die Handnotbetätigung eine rückstellende Federkraft bereitstellt, als auch eine Einstellung für eine zur Betätigung der Handnotbetätigung aufzuwendenden Kraft mittels der Hebellänge des Handhebels.

In einer anschaulichen Ausgestaltung wird das Betätigungselement durch einen Abschnitt des Blechbügels gebildet, der zum Hubbegrenzungsmittel hin absteht. Dies erlaubt die integrale Ausgestaltung des Betätigungselements mit dem Handhebel, so dass weiterhin Material und Anzahl der Bauelemente zur Umsetzung der Handnotbetätigung reduziert werden kann und sich die aufzubauende Handnotbetätigung gemäß dieser vorteilhafteren Ausgestaltung stark vereinfacht.

Gemäß einer weiteren vorteilhafteren Ausgestaltung erstreckt sich der Blechbügel teilweise entlang des Handgriffs. Weiterhin ist am Handgriff ein Material mit einer Biegesteifigkeit vorgesehen, die größer ist als die Biegesteifigkeit des Blechbügels. Auf diese Weise kann zum einen eine gewünschte rückstellende Federkraft für die Handnotbetätigung bereitgestellt werden, wobei unabhängig davon eine ausreichende Festigkeit des Handhebels umgesetzt wird.

In einem weiteren Aspekt der Erfindung wird ein Hydraulikventil mit einem, in einem Ventilgehäuse gelagerten Absperrelement, wenigstens einem am Ventilgehäuse angeordneten Ankerrohr, in das ein Anker axial verschiebbar angenommen und an dem wenigstens ein Betätigungsmagnet angeordnet ist, und einer Handnotbetätigung gemäß dem ersten Aspekt bereitgestellt. Die Handnotbetätigung ist an einem dem Ventilgehäuse gegenüberliegenden Ende des Ankerrohrs angeordnet und das Betätigungselement ist weiter zur axialen Verschiebung des Ankers ausgebildet, wobei der Anker zur Steuerung des Absperrelements ausgebildet ist.

Gemäß einer anschaulichen Ausführungsform ist ein Einsatz an dem Ende des Ankerrohrs angeordnet, das dem Ventilgehäuse gegenüberliegt, und das Hubbegrenzungsmittel ist als Stiftfortsatz ausgebildet, welches zwischen dem Betätigungselement und dem Anker in einer den Einsatz axial durchsetzenden Öffnung verschiebbar gelagert ist, so dass bei Betätigung der Handnotbetätigung ein mechanischer Druck durch den Stiftfortsatz auf den Anker übertragen wird. Hierdurch wird eine vorteilhafte Kraftübertragung vom Betätigungselement auf den Anker bereitgestellt.

In einer anschaulichen Ausgestaltung ist der Stiftfortsatz pilzförmig ausgebildet und steht ohne äußere Krafteinwirkung mit einem das Betätigungsende bildenden Sitz am Einsatz abdichtend in Eingriff. Der Stiftfortsatz weist am Pilzkopf eine Anschlagoberfläche für den Anker auf. Auf diese Weise wird eine vorteilhafte Kraftübertragung zur Verschiebung des Ankers bereitgestellt.

Gemäß einer weiteren anschaulichen Ausführungsform weist der Handhebel einen Abschnitt auf, der abschnittsweise parallel zu einer Oberfläche des Einsatzes ist, in dem die Öffnung gebildet ist. Beispielsweise kann der Handhebel eine leichte S-förmige Gestalt aufweisen, wobei das Betätigungselement an einem Abschnitt angeordnet ist, der eine parallel zu einer Oberfläche des Einsatzes orientierte Fläche aufweist. Dadurch werden Toleranzen des Betätigungselements relativ dem Stiftfortsatz in der Öffnung hervorgerufen durch eine Schwenkbewegung bei Betätigung des Handhebels gering gehalten, so dass Toleranzen für die Öffnung und den Stiftfortsatz klein gehalten werden.

In einer weiteren anschaulichen Ausführungsform ist der Blechbügel zwischen dem Einsatz und dem Ankerrohr angebracht. Dies erlaubt eine einfache und zuverlässige Anbringung des Blechbügels an der Handnotbetätigung.

In einer weiteren anschaulichen Ausführungsform ist das Hydraulikventil durch den wenigstens einen Betätigungsmagneten direkt betätigbar oder druckvorgesteuert. Bei einer direkten Betätigung wirkt der Anker, beispielsweise über einen Stößel auf einen Schieberkolben oder ein Absperrelement, während im Falle einer Druckvorsteuerung ein Ventilglied der Druckvorsteuerung betätigt wird, das als Pilotsteuerung Bewegungen des Schieberkolbens oder Absperrelements steuert.

In einer weiteren anschaulichen Ausführungsform besteht das Betätigungselement aus einem unmagnetischen Material. Damit unterliegt das Betätigungselement nicht dem Einfluss des Magnetfelds, das durch den Betätigungsmagneten erzeugt wird.

Weitere vorteilhafte Ausführungsformen und Ausgestaltungen der vorliegenden Erfindung gehen aus der nachfolgenden Beschreibung zusammen mit den Figuren hervor, in welchen:
- Fig. 1: schematisch eine Querschnittsansicht einer Handnotbetätigung für ein Hydraulikventil gemäß einiger anschaulicher Ausführungsformen der Erfindung darstellt;
- Fig. 2a: schematisch eine Querschnittsansicht einer Handnotbetätigung gemäß weiterer anschaulicher Ausführungsformen der Erfindung darstellt;
- Fig. 2b: schematisch eine Handnotbetätigung gemäß einer alternativen Ausgestaltung zu Fig. 2a darstellt;
- Fig. 3a: schematisch eine Schnittansicht eines Handhebels gemäß einer anschaulichen Ausführungsform der Erfindung zeigt; und
- Fig. 3b: schematisch eine Schnittansicht eines Handhebels gemäß einer alternativen Ausführungsform darstellt.

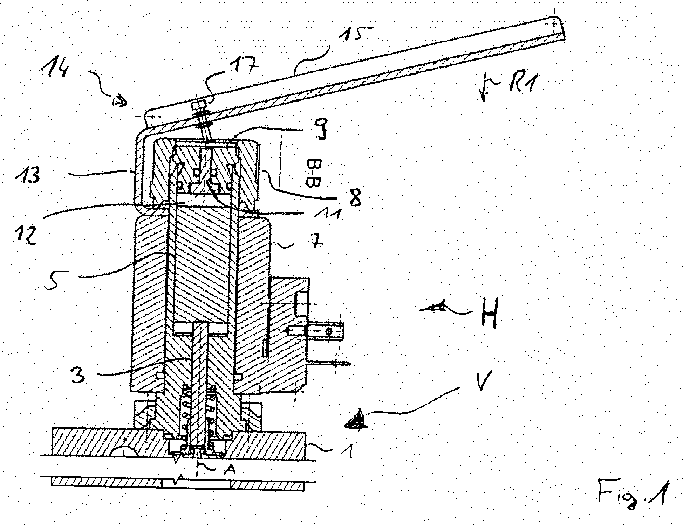

Figur 1 zeigt einen Abschnitt eines als Schieberventil V ausgebildeten Hydraulikventils mit einer an einem Schiebergehäuse 1 des Schieberventils V angebrachten Handnotbetätigung H. In das Schiebergehäuse 1 ist ein axial verschiebbarer Schieberkolben (nicht dargestellt) aufgenommen, der im Schiebergehäuse 1 entlang einer Achse A verschiebbar gelagert ist.

Die Handnotbetätigung H weist ein an dem Schiebergehäuse 1 angeordnetes Ankerrohr 7 auf, wobei in dem Ankerrohr 7 ein Anker 5 verschiebbar gelagert ist. Durch Verschiebung des Ankers 5 zum Schiebergehäuse 1 hin übt dieser einen mechanischen Druck auf einen Stößel 3 aus, der zur Kraftübertragung auf den Schieberkolben (nicht dargestellt) im Schiebergehäuse 1 zwischen dem Anker 5 und dem Schieberkolben (nicht dargestellt) angeordnet ist. Dies bedeutet, dass eine Verschiebung des Ankers 5 durch den Stößel 3 proportional auf den Schieberkolben übertragen werden.

In einigen anschaulichen Ausführungsformen umfasst das Ankerrohr 7 wenigstens einen Betätigungsmagneten, beispielsweise wenigstens einen Schwarz-Weiß-Magnet und/oder einen Proportionalmagnet. In Ausführungsformen mit wenigstens einem Proportionalmagnet erzeugt dieser zum Beispiel gemäß einem vorbestimmten Kraftverlauf eine Magnetkraft, wobei der Wert der Magnetkraft von einer Bestromung des Proportionalmagneten abhängt. Abhängig von einer Bestromung des Proportionalmagneten wird durch die vom Proportionalmagneten erzeugte Magnetkraft entsprechend eine Verschiebung des Ankers 5 im Ankerrohr 7 hervorgerufen, die über den Stößel 3 an den Schieberkolben im Ventilgehäuse 1 übertragen werden kann.

Gemäß einiger anschaulicher Ausführungsformen kann der Betätigungsmagnet mit einer Adapterplatte am Ende des Schiebergehäuses 1 abnehmbar festgelegt sein und einen z.B. rohrenförmigen Spulenkörper aufweisen, der elektrische Anschlussstecker besitzt, die, an einer Seite des Spulenkörpers 4 zur Bestromung des Betätigungsmagneten angeordnet sein können.

In beispielhaften Umsetzungen kann das Schieberventil V als ein Mehrwege-Mehrstellungs-Schieberventil ausgebildet sein, das eine einstellbare Menge eines Hydraulikfluids pro Zeiteinheit und damit eine Druckmittelbeaufschlagung eines Hydroverbrauchers zum Antrieb des Hydroverbrauchers steuert, wobei die durch das Schieberventil V pro Zeiteinheit geförderte Menge an Hydraulikfluid die Geschwindigkeit des Hydroverbrauchers bestimmt.

In einigen anschaulichen Ausführungsformen ist an dem Ankerrohr 7 ferner ein Einsatz 9 vorgesehen, der von einer axiale Öffnung durchsetzt wird, die gemäß einiger expliziter Beispiele mit der Achse A fluchtet. In einer anschaulichen Ausgestaltung ist die axiale Öffnung im Einsatz 9 als Durchgangsbohrung gebildet.

In der axialen Öffnung ist ein Stiftfortsatz 11 bereitgestellt. Der Stiftfortsatz ist gemäß anschaulicher Ausführungsformen pilzförmig oder T-förmig ausgestaltet, obwohl dies keine Beschränkung der Erfindung darstellt. In einigen beispielhaften Ausführungsformen ist der Stiftfortsatz 11 über einen Ohrring abgedichtet in der Öffnung geführt. Am unteren Ende der Öffnung kann eine Erweiterung für den Pilzkopf des Stiftfortsatzes 11 vorgesehen sein, der eine Anschlagfläche 12 aufweist, die dem im Ankerrohr 7 verschiebbaren Anker 5 zuweist. Das obere Ende des Stiftfortsatzes 11, d.h. das dem pilzförmigen Ende des Stiftfortsatzes 11 entgegengesetzte Ende, ist an einem freiliegenden Ende der Öffnung im Einsatz 9 angeordnet. An dem freiliegenden Ende der Öffnung liegt ein Betätigungselement 17 am Stiftfortsatz 11 an, das an einem Handhebel 14 angebracht ist.

Gemäß anschaulicher Ausführungsformen umfasst der Handhebel 14 einen Blechbügel 13, das im Wesentlichen U-förmig gebogen und zwischen dem Einsatz und dem Ankerrohr 7 an der Handnotbetätigung H angebracht ist. Ein Schenkel des Blechbügels 13 ist dabei länger als der andere Schenkel, so dass der längere Schenkel des Blechbügels 13 eine Hebellänge des Handhebels 14 festlegt. An dem Blechbügel kann ferner ein Handgriff 15 angebracht sein, so dass der Handhebel 14 gut gegriffen werden kann.

In einigen anschaulichen Ausführungsformen ist das Betätigungselement 17 als ein Gewindestift ausgebildet, der in einem im Handhebel 14, wenigstens im Blechbügel 13, bereitgestelltes Gewindeloch angebracht ist. Das Betätigungselement 17 liegt derart am Stiftfortsatz 11 an, dass das Betätigungselement 17 bei Betätigung der Handnotbetätigung H, d.h. einer Ausübung einer mechanischen Kraft auf den Handhebel 14 entlang einer Richtung R1, in die Öffnung im Einsatz 9 eingeführt wird. Dadurch wird eine mechanische Kraft auf den Stiftfortsatz 11 ausgeübt, der an seinem pilzförmigen Ende (d.h. an der Anschlagfläche 12) einen mechanischen Druck auf den Anker 5 überträgt. Der auf den Anker 5 ausgeübte mechanische Druck wird wiederum durch den Stößel 3 entlang der Achse A auf den Schieberkolben (nicht dargestellt) übertragen, so dass eine Position des Schieberkolbens (nicht dargestellt) im Schiebergehäuse 1 festgelegt wird. Diese festgelegte Position des Schieberkolbens im Ventilgehäuse 1 kann einem Betätigungszustand der Handnotbetätigung entsprechen, so dass das Ventil V in einen Not-Modus überführt wird. Beispielsweise kann der Not-Modus einem Ventilzustand des Schieberventils V entsprechen, in dem ein Druckmittel einem Hydraulikverbraucher zu- bzw. vom Hydraulikverbraucher abgeführt wird, und dadurch weiterhin eine vorbestimmte Geschwindigkeit am Hydraulikverbraucher eingestellt wird, obwohl eine normale hydraulische und/oder elektrische Steuerung des Schieberventils V nicht möglich ist.

In einigen anschaulichen Beispielen kann der Gewindestift 17 beispielsweise durch zwei Kontermuttern am Bügelblech 13 befestigt sein. Weiterhin kann durch eine Windungstiefe des Gewindestifts 17 am Bügelblech 13 eine vorbestimmte Hubauslenkung des Stiftfortsatzes 11 im Einsatz 9 festgelegt werden, welche zur Hubbegrenzung des Schieberkolbens im Ventil V eingesetzt werden kann. Insbesondere kann der Stiftfortsatz 11 mit dem Gewindestift 17 eine vorbestimmte Anschlagposition der Anschlagfläche 12 für den Anker 5 definieren, an der dieser abgefangen wird, sobald es sich in Fig. 1 beispielsweise nach oben bewegt. Andererseits ist die Anschlagfläche 12 als Teil der Handnoteinrichtung H nutzbar, wobei nach Betätigung des Handhebels 14 durch Ausüben einer mechanischen Kraft auf den Handhebel entlang der Richtung R1 der Handhebel 14 nach unten bewegt wird und damit eine manuelle Verschiebung des Ankers 5 im Ankerrohr 7 erreicht wird. Damit kann das Schieberventil 1 durch die Handnotbetätigung H trotz z.B. einem Kabelbruch oder Stromausfall, etwa bei nicht mehr funktionsfähigen Betätigungsmagneten, mechanisch so betätigt werden kann, dass beispielsweise durch einen Handnotzustand des Schieberventils V eine angehobene und gehaltene Last kontrolliert abgesenkt werden kann.

Alternativ kann das Betätigungselement 17 in den Handhebel 14 eingepresst sein, wenn auf eine einstellbare Hubbegrenzung verzichtet werden kann.

In anschaulichen Ausführungsformen kann der Einsatz 9 in ein oberes Ende des Ankerrohrs 7 eingeschraubt sein. Dazu kann beispielsweise ein Innengewinde im Ankerrohr 7 bzw. eine am oberen Ende des Ankerrohrs 7 angebrachten Aufsatzes 8 vorgesehen sein, in das der Einsatz 9 eingeschraubt wird. Alternativ kann der Einsatz 9 eingepresst sein.

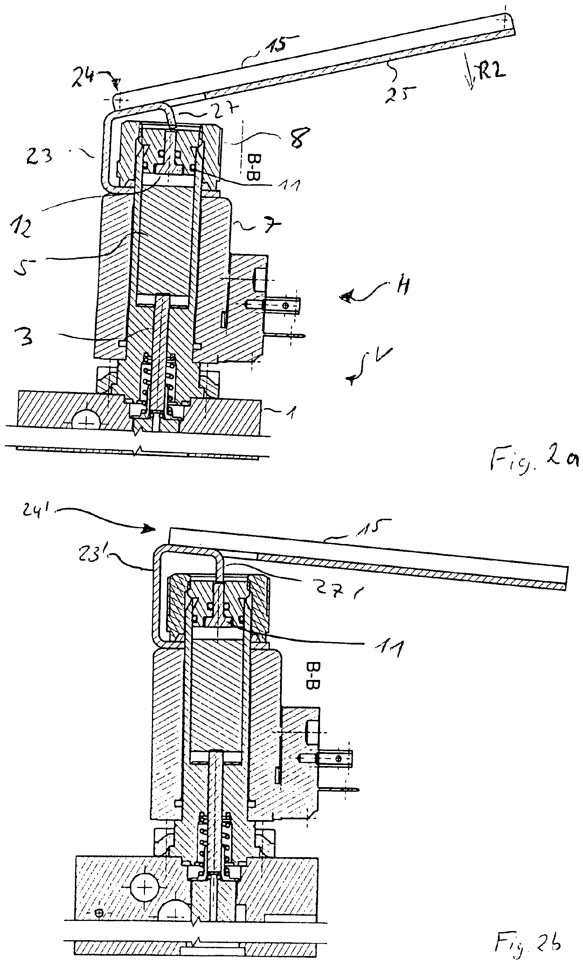

Hinsichtlich Fig. 2 wird eine zu Fig. 1 alternative anschauliche Ausführungsform beschrieben. Hierbei sind in den Fig. 2a und 2b ähnliche Elemente mit gleichen Bezugszeichen versehen. Dementsprechend wird für eine Beschreibung dieser ähnlichen/gleichen Elemente auf die entsprechende Beschreibung zu Fig. 1 verwiesen.

Die in Fig. 2a dargestellte Ausführungsform unterscheidet sich von der in Fig. 1 dargestellten Ausführungsform dadurch, dass anstelle des Blechbügels 13 ein Blechbügel 23 vorgesehen ist, der sich lediglich teilweise entlang des Handgriffs 15 erstreckt. Zusätzlich kann am Handgriff 15 ein weiteres Verstärkungselement 25 vorgesehen, das sich beispielsweise entlang des Handgriffs 15 über mehr als die Hälfte der Hebellänge des durch den Handhebel 24 bereitgestellten Handhebels erstreckt.

In einigen anschaulichen Ausführungsformen werden für den Blechbügel 23 und das Verstärkungselement 25 unterschiedliche Materialien und/oder unterschiedliche Dicken für die Bleche gewählt, aus denen der Blechbügel 23 und das Verstärkungselement 25 gebildet werden. Damit kann erreicht werden, dass die Biegesteifigkeit des Blechbügels 23 kleiner ist als die Biegesteifigkeit des Verstärkungselements 25. Dementsprechend kann eine stabile Hebelkonfiguration bereitgestellt werden, wobei ein gewünschtes rückstellendes Federmoment durch eine ausgewählte Biegesteifigkeit des Blechbügels 23 festgelegt werden kann, ohne dass die Stabilität des Handhebels 24 durch die Wahl der Biegesteifigkeit des Blechbügels 23 begrenzt wird.

In einigen anschaulichen Ausführungsformen ist am Handhebel 24 weiterhin ein Betätigungselement 27 vorgesehen, das beispielsweise durch einen stiftförmigen Fortsatz des Blechbügels 23 gebildet wird, der axial von dem Handhebel 24 zum Stiftfortsatz 11 hin absteht. Alternativ kann das Betätigungselement 27 durch einen stiftförmigen Fortsatz des Verstärkungselements 25 gebildet werden.

Ohne äußere Krafteinwirkung wird durch die rückstellende Federkraft des Blechbügels 23 der Handhebel 24 in einer Ruheposition gehalten (beispielsweise durch eine geeignete Formgebung des Blechbügels 23 festgelegt), in der vorzugsweise das Betätigungselement 27 am Stiftfortsatz 11 anliegt. Bei Betätigung des Handhebels 24, d.h. einer Ausübung einer mechanischen Kraft entlang einer Richtung R2 wird das Betätigungselement 27 in die Öffnung des Einsatzes eingeführt und dadurch ein mechanischer Druck auf den Stiftfortsatz 11 ausgeübt. Über die Anschlagfläche 12 wird der auf den Stiftfortsatz 11ausgeübte mechanische Druck an den Anker 5 übertragen, der diesen über den Stößel 3 an einen Schieberkolben (nicht dargestellt), der im Ventilgehäuse 1 verschiebbar gelagert ist, weitergibt. Eine Betätigung der Handnotbetätigung H in Fig. 2a entspricht demgemäß einer Betätigung der Handnotbetätigung H in Fig. 1.

Mit Bezug auf Fig. 2b wird eine zu Fig. 2a alternative Ausgestaltung beschrieben, gemäß der ein Blechbügel 23' stärker gebogen ist als der Blechbügel 23 in Fig. 2a. Dadurch kann das Betätigungselement 27' bündig an den Stiftfortsatz 11 im Einsatz 9 angelegt werden, d.h., das Betätigungselement 27' und der Stiftfortsatz 11 sind in axialer Verlängerung zueinander positioniert. Damit können Toleranzen hinsichtlich der Öffnung im Einsatz bzw. Abmessungen des Stiftfortsatzes 11 und des Betätigungselements 27, etwa hinsichtlich der Position des Betätigungselements 27, gegenüber der in Fig. 2a dargestellten Ausführungsform verringert werden. Weiterhin wirkt das Betätigungselement 27' direkt geradlinig auf den Stiftfortsatz 11 bei Betätigung des Handhebels 24', so dass eine optimale Kraftübertragung erreicht wird.

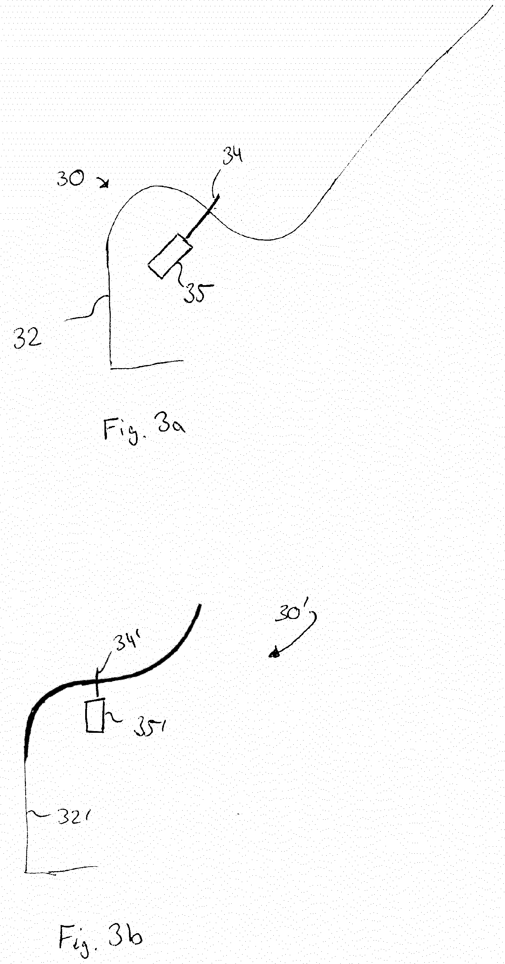

Mit Bezug auf die Fig. 3a und 3b werden anschauliche Ausgestaltungen eines Handhebels gemäß unterschiedlicher Aspekte der Erfindung beschrieben.

Die in Fig. 3a dargestellte Ausführungsform eines Handhebels 30 weist entgegen der im Wesentlichen geradlinigen Ausgestaltungen der in den Fig. 1 und 2a, 2b dargestellten Handhebel eine S-förmige Gestalt auf. Der Handhebel 30 ist lediglich schematisch dargestellt und auf eine Darstellung von Details, wie einen Handgriff und eine optionale Verstärkung am Handgriff, wurde verzichtet. Diese sind entsprechend den oben beschriebenen Ausführungsformen vorzusehen, so dass von einer detaillierten Beschreibung abgesehen wird.

Der Handhebel 30 weist einen Blechbügel 32 auf, an dem ein Betätigungselement 34 vorgesehen ist (etwa eines der Betätigungselemente 17, 27, 27' wie oben beschrieben). Das Betätigungselement 32 ist in einem Wendepunkt der S-Gestalt angeordnet und liegt im Ruhezustand an einem Stiftfortsatz 35 an. Bei Betätigung des Handhebels 30 kann eine annähernd geradlinige Verschiebung des Betätigungselements 34 erfolgen, so dass mit einer im wesentlichen geradlinig gerichteten mechanischen Kraft im Schwenkbereich des Handhebels 30 auf den Stiftfortsatz 35 eingewirkt wird.

Durch die S-förmige Gestalt des Handhebels 30 sollen Toleranzen in der Öffnung im Einsatz, des Stiftfortsatzes und/oder der Position des Betätigungselements am Handhebel hervorgerufen durch eine gekrümmte Schwenkbahn des Betätigungselements verringert werden. Die Toleranzen treten also dadurch auf, dass sich das Betätigungselement 17 bzw. 27, 27' im geradlinigen Handhebel gemäß den Fig. 1, 2a und 2b streng genommen auf einer von einer geraden Bahnkurve abweichenden gekrümmten Bahn bewegt, da das Betätigungselement 17, 27, 27' bezüglich des Schwenkpunkts des Handhebels gegeben durch den Handhebel 14, 24, 24' festgestellt ist, d.h. einen konstanten Schwenkradius aufweist. Für kleine Schwenkbewegungen des Handhebels, etwa in der in Fig. 2b dargestellten Ausführungsform, kann die Bahnkurve des Betätigungselements unter Betätigung des Handhebels in guter Näherung als geradlinig angenommen werden, so dass sich hier geringe Toleranzen ergeben. Hingegen sind in den in den Fig. 1 und 2a dargestellten Ausführungsformen aufgrund des größeren Schwenkwinkelbereichs des Handhebels zur Betätigung der Handnotbetätigung H Bahnkurven für das Betätigungselement 17, 27 eingestellt, die nicht mehr annähernd geradlinig, sondern auf einer Kreisbahn mit Mittelpunkt im Schwenkpunkt des Handhebels mit Radius entsprechend dem Abstand des Betätigungselements 17, 27 vom Schwenkpunkt verlaufen.

Gemäß einer Anordnung des Betätigungselements in der in Fig. 3a dargestellten Weise wird eine geradlinige Bewegung des Betätigungselements im Schwenkwinkelbereich des Handhebels deren Betätigung der Handnotbetätigung H bereitgestellt.

In Fig. 3b ist eine andere Ausführungsform eines Handhebels 30' dargestellt, die eine leichte S-förmige Gestalt aufweist. Auch hier ist der Handhebel 30' lediglich schematisch dargestellt und auf eine Darstellung von Details, wie einen Handgriff und eine optionale Verstärkung am Handgriff, wurde verzichtet. Diese sind entsprechend den oben beschriebenen Ausführungsformen vorzusehen, so dass von einer detaillierten Beschreibung abgesehen wird.

Der Handhebel 30' weist einen Blechbügel 32' auf, an dem ein Betätigungselement 34' vorgesehen ist (etwa eines der Betätigungselemente 17, 27, 27' wie oben beschrieben). Das Betätigungselement 32' ist in einem Abschnitt der flachen S-Gestalt angeordnet, an dem der Abschnitt parallel zu einer freiliegenden Fläche eines Stiftfortsatzes 35'liegt, an das das Betätigungselement 34' im Ruhezustand anliegt. Bei Betätigung des Handhebels 30' kann eine annähernd geradlinige Verschiebung des Betätigungselements 34' erfolgen, so dass mit einer im wesentlichen geradlinig gerichteten mechanischen Kraft im Schwenkbereich des Handhebels 30' auf den Stiftfortsatz 34' eingewirkt wird.

Im Gegensatz zu Fig. 3a zeigt Fig. 3b eine Ausführungsform, bei der das Betätigungselement im Wendepunkt eines schwach S-gekrümmten Handhebels angeordnet ist, so dass bei Betätigung des schwach S-gekrümmten Handhebels schon eine geringe Bahnbewegung des Betätigungselements in sehr guter Näherung zu einer geradlinigen Bahnbewegung des Betätigungselements im Schwenkbereich des Handhebels führt.

Der Ausdruck "schwache S-Gestalt" oder "schwache S-Form" bezieht sich auf einen großen Krümmungsradius an einem S-Bogen. Gemäß einiger anschaulicher Beispiele kann unter einem großen Krümmungsradius ein Radius von mehr als 1,5 cm, vorzugsweise mehr als 1,7 cm, weiter bevorzugt mehr als 2,0 cm verstanden werden. Zusätzlich oder alternativ kann unter einer "schwachen S-Form" oder "schwachen S-Gestalt" eine Form/Gestalt mit einem Bogen verstanden werden, der einen Winkel (gebildet aus dem Schwenkpunkt, einem Mittelpunkt des an den Bogen anschmiegenden Kreissegments und dem Wende- oder Flachpunkt der Hebelform) aus einem Bereich bis zu 60° oder bis zu 50° oder bis zu 40° oder bis zu 35° oder bis zu 30°aufweist. "Stark" ist entsprechend komplementär zu verstehen.

In einigen anschaulichen Ausführungsformen ist bei einem Handhebel von schwacher S-Gestalt oder schwacher S-Form wenigstens der S-Bogen gebildet zwischen Hebelpunkt und Wende- oder Flachpunkt mit einem großen Krümmungsradius bzw. kleinem Winkel (vgl. obiger Absatz) ausgebildet.

In einigen anschaulichen Beispielen liegt eine Länge des Handhebels (von Hebelpunkt zu Ende des Handgriffs) zwischen 10 cm und 15 cm. Dies stellt jedoch keine Beschränkung der Erfindung dar und es sind davon abweichende Größen, z.B. mehr als 15 cm oder mehr als 20 cm, denkbar.

In den verschiedenen vorab beschrieben Ausführungsformen stellt der Handhebel eine vorteilhafte Kraftübersetzung bereit. In anschaulichen Beispielen der Erfindung kann durch den Handhebel leicht eine Betätigungskraft von bis zu 40 N (entspricht einer Gewichtskraft von einer Masse von 4 kg) oder mehr aufgewendet werden, um die Handnotbetätigung zu betätigen. Gegenüber bekannten Beispielen, in denen die Handnotbetätigung mit einem externen Werkzeug, etwa einem Schraubenzieher oder dergleichen, zu betätigen ist, stellt eine Betätigungskraft von 40 N, wie bei bekannten Schieberventilen durchaus zu erwarten ist, eine große Anforderungen an den Bediener dar.

Obwohl in den verschiedenen vorangehend beschriebenen Ausführungsformen explizit ein Schieberventil beschrieben ist, stellt dies keine Beschränkung der vorliegenden Erfindung dar. Anstelle des Schieberventils kann ein Sitzventil mit einem entsprechenden Absperrelement anstelle eine Schiebers vorgesehen sein. Dementsprechend stellt die Erfindung in verschiedenen anschaulichen Ausführungsformen eine Handnotbetätigung bereit, die auf einem z.B. durch einen Elektromagneten steuerbaren Hydraulikventil angeordnet ist, wobei das Hydraulikventil in Schieber- oder Sitzventilbauart ausgebildet sein kann. Anschauliche Sitzventile sind z.B. durch Kegel-, Kugel- und Teller-Sitzventile gegeben. Je nach Bauweise ist das Absperrelement dabei als plattenförmiges, kegelförmiges oder kugelförmiges Sitzelement ausgebildet, das etwa durch ein Vorspannelement, z.B. eine Feder, gegen einen Ventilsitz dichtend vorgespannt ist. In anschaulichen Beispielen kann der Anker über den Stößel entgegen der Vorspannkraft des Vorspannelements das Sitzventil gesteuert öffnen.

Gemäß anschaulicher Ausführungsformen der vorliegenden Erfindung können Schieberventile beispielsweise in Hochdruckhydrauliken, Mobilhydrauliken oder Staplerhydrauliken oder im Hydraulikkreis von Kippladern eingesetzt werden.

## Patentansprüche

1. Handnotbetätigung (H) für ein Hydraulikventil (V), das bei Betätigung eine Verstellung des Hydraulikventils (V) in einen vorbestimmten Ventilzustand bewirkt, wobei die Handnotbetätigung (H) ein Hubbegrenzungsmittel (11) für das Hydraulikventil (V) und ein Betätigungselement (17, 27) umfasst, das bei Betätigung auf das Hubbegrenzungsmittel (11) eine verstellende Kraft ausübt, wobei die Handnotbetätigung (H) ferner einen Handhebel (14, 24) umfasst, an dem das Betätigungselement (17, 27) angebracht ist, **dadurch gekennzeichnet, dass** das Betätigungselement (17, 27) axial vom Handhebel (14, 24) zum als Stiftfortsatz ausgebildeten Hubbegrenzungsmittel (11) hin absteht.

2. Handnotbetätigung (H) nach Anspruch 1, wobei der Handhebel (14, 24) durch einen Blechbügel (13, 23) und einen Handgriff (15) gebildet ist, wobei sich der Blechbügel (13, 23) wenigstens teilweise entlang dem Handgriff (15) in Richtung einer Hebellänge des Handhebels (14, 24) erstreckt.

3. Handnotbetätigung (H) nach Anspruch 1 oder 2, wobei das Betätigungselement (17) einen Gewindestift umfasst, der an dem Handhebel (14) lösbar angebracht ist und durch den eine Position des Hubbegrenzungselements (11) in der Handnotbetätigung (H) vorgegeben werden kann.

4. Handnotbetätigung (H) nach Anspruch 2, wobei das Betätigungselement (27) durch einen Abschnitt des Blechbügels (23) gebildet wird, der zum Hubbegrenzungsmittel (11) hin absteht.

5. Handnotbetätigung (H) nach Anspruch 2 oder 4, wobei sich der Blechbügel (23) teilweise entlang des Handgriffs (25) erstreckt und weiterhin am Handgriff (15) ein Verstärkungselement (25) vorgesehen ist, dessen Biegesteifigkeit größer ist als die Biegesteifigkeit des Blechbügels (23).

6. Hydraulikventil (V) mit einem in einem Ventilgehäuse (1) gelagerten Absperrelement, wenigstens einem am Ventilgehäuse (1) angeordneten Ankerrohr (7), in das ein Anker (5) axial verschiebbar aufgenommen und an dem ein Betätigungsmagnet angeordnet ist, und einer Handnotbetätigung (H) nach einem der Ansprüche 1 bis 5, die an einem dem Ventilgehäuse (1) gegenüberliegenden Ende des Ankerrohrs (7) angeordnet ist, wobei das Betätigungselement (17, 27) zur axialen Verschiebung des Ankers (5) ausgebildet ist und der Anker zur Steuerung des Absperrelements ausgebildet ist.

7. Hydraulikventil (V) nach Anspruch 6, wobei ein Einsatz (9) an dem Ende des Ankerrohrs (7) angeordnet ist, das dem Ventilgehäuse (1) gegenüberliegt, und das Hubbegrenzungsmittel (11) als Stiftfortsatz ausgebildet ist, welches zwischen dem Betätigungselement (17, 27) und dem Anker (5) in einer den Einsatz (9) axial durchsetzenden Öffnung verschiebbar gelagert ist, so dass bei Betätigung der Handnotbetätigung (H) ein mechanischer Druck durch den Stiftfortsatz auf den Anker (5) übertragen wird.

8. Hydraulikventil (V) nach Anspruch 7, wobei der Stiftfortsatz pilzförmig ausgebildet ist und ohne äußere Krafteinwirkung mit einem das Betätigungsende bildenden Sitz am Einsatz (9) abdichtend in Eingriff steht, wobei der Stiftfortsatz am Pilzkopf eine Anschlagfläche (12) für den Anker aufweist.

9. Hydraulikventil (V) nach Anspruch 7 oder 8, wobei der Handhebel (14, 24) eine S-förmige Gestalt aufweist.

10. Hydraulikventil (V) nach Anspruch 9, wobei der Handhebel (14, 24) einen Abschnitt aufweist, der abschnittsweise parallel zu einer Oberfläche des Einsatzes ist, in dem die Öffnung gebildet ist.

11. Hydraulikventil (V) nach einem der Ansprüche 7 bis 10 in Verbindung mit einer Handnotbetätigung (H) nach einem der Ansprüche 2 bis 5, wobei der Blechbügel (13, 23) zwischen dem Einsatz (9) und dem Ankerrohr (7) angebracht ist.

12. Hydraulikventil (V) nach einem der Ansprüche 6 bis 11, wobei das Hydraulikventil (V) durch den wenigstens einen Betätigungsmagneten direkt betätigbar oder druckvorgesteuert ist.

13. Hydraulikventil (V) nach einem der Ansprüche 6 bis 12, wobei das Betätigungselement (17, 27) aus einem unmagnetischen Material besteht.

## Claims

1. A manual emergency actuator (H) for a hydraulic valve (V), which, when actuated, effects a displacement of the hydraulic valve (V) into a predetermined valve state, wherein the manual emergency actuator (H) includes a stroke limiting means (11) for the hydraulic valve (V) and an actuating element (17, 27), which, when actuated, exerts a displacing force on the stroke limiting means (11), wherein the manual emergency actuator (H) further includes a hand lever (14, 24), on which the actuating element (17, 27) is mounted, **characterised in that** the actuating element (17, 27) projects axially from the hand lever (14, 24) towards the stroke limiting means (11), which is constructed as a pin extension.

2. A manual emergency actuator (H) as claimed in Claim 1, wherein the hand lever (14, 24) is constituted by a metal bracket (13, 23) and a handle (15), wherein the metal bracket (13, 23) extends at least partially along the handle (15) in the direction of a lever length of the hand lever (14,24).

3. A manual emergency actuator (H) as claimed in Claim 1 or 2, wherein the actuating element (17) includes a threaded pin, which is releasably mounted on the handle lever (14) and by which a position of the stroke limiting element in the manual emergency actuator (H) can be predetermined.

4. A manual emergency actuator (H) as claimed in Claim 2, wherein the actuating element (27) is constituted by a section of the metal bracket (23), which projects towards the stroke limiting means (11).

5. A manual emergency actuator (H) as claimed in Claim 2 or 4, wherein the metal bracket (23) extends partially along the handle (25) and a reinforcing element (25) is further provided on the handle (15), the rigidity of which is greater than the rigidity of the metal bracket (23).

6. A hydraulic valve (V) with a shut off element mounted in a valve housing (1), at least one anchor tube (7) arranged on the valve housing (1), in which an anchor (5) is accommodated so as to be axially movable and on which an actuating magnet is arranged, and a manual emergency actuator (H) as claimed in one of Claims 1 to 5, which is arranged on one end of the anchor tube (7) opposite to the valve housing (1), wherein the actuating element (17, 27) is constructed for axial displacement of the anchor (5) and the anchor is constructed to control the shut off element.

7. A hydraulic valve (V) as claimed in Claim 6, wherein an insert (9) is arranged at the end of the anchor tube (7), which is opposite to the valve housing (1), and the stroke limiting means (11) is constructed as a pin extension, which is movably mounted between the actuating element (17, 27) and the anchor (5) in an opening passing axially through the insert (9) so that, when the manual emergency actuator (H) is actuated, a mechanical pressure is transmitted to the anchor (5) through the pin extension.

8. A hydraulic valve (V) as claimed in Claim 7, wherein the pin extension is of mushroom shape and without the action of external force is in sealing engagement with a seat, constituting the end of the actuation, on the insert (9), wherein the pin extension has an abutment surface (12) for the anchor on the mushroom head.

9. A hydraulic valve (V) as claimed in Claim 7 or 8, wherein the hand lever (14, 24) has an S shaped construction.

10. A hydraulic valve (V) as claimed in Claim 9, wherein the handle lever (14, 24) has a section, which is parallel in sections to a surface of the insert, in which the opening is formed.

11. A hydraulic valve (V) as claimed in one of Claims 7 to 10 in conjunction with a manual emergency actuator (H) as claimed in one of Claims 2 to 5, wherein the metal bracket (13, 23) is mounted between the insert (9) and the anchor tube (7).

12. A hydraulic valve (V) as claimed in one of Claims 6 to 11, wherein the hydraulic valve (V) is directly actuable by the at least one actuating magnet or pressure pilot controlled.

13. A hydraulic valve (V) as claimed in one of Claims 6 to 12, wherein the actuating element (17, 27) consists of a non-magnetic material.

## Revendications

1. Commande manuelle d'urgence (H) pour une soupape hydraulique (V) qui, lors de l'actionnement, effectue un déplacement de la soupape hydraulique (V) dans un état de soupape prédéfini, dans laquelle la commande manuelle d'urgence (H) comprend un moyen de limitation de course (11) pour la soupape hydraulique (V) et un élément d'actionnement (17, 27) qui, lors de l'actionnement exerce une force de déplacement sur le moyen de limitation de course (11), dans laquelle la commande manuelle d'urgence (H) comprend en outre un levier manuel (14, 24), sur lequel est agencé l'élément d'actionnement (17, 27), **caractérisée en ce que** l'élément d'actionnement (17, 27) dépasse axialement du levier manuel (14, 24) par rapport au moyen de limitation de course (11) conçu comme un prolongement en forme de tige.

2. Commande manuelle d'urgence (H) selon la revendication 1, dans laquelle le levier manuel (14, 24) est formé par un étrier en tôle (13, 23) et une poignée (15), dans laquelle l'étrier en tôle (13, 23) s'étend au moins partiellement le long de la poignée (15) dans le sens d'une longueur de levier du levier manuel (14, 24).

3. Commande manuelle d'urgence (H) selon la revendication 1 ou 2, dans laquelle l'élément d'actionnement (17) comprend une tige filetée, qui est agencée de façon détachable sur le levier manuel (14) et par laquelle une position de l'élément de limitation de course (11) peut être prédéfinie dans la commande manuelle d'urgence (H).

4. Commande manuelle d'urgence (H) selon la revendication 2, dans laquelle l'élément d'actionnement (27) est formé par une section de l'étrier en tôle (23) qui dépasse par rapport au moyen de limitation de course (11).

5. Commande manuelle d'urgence (H) selon la revendication 2 ou 4, dans laquelle l'étrier en tôle (23) s'étend partiellement le long de la poignée (25) et, de plus, est prévu sur la poignée (15) un élément de renforcement (25) dont la rigidité flexionnelle est supérieure à la rigidité de l'étrier en tôle (23).

6. Soupape hydraulique (V) avec un élément de blocage logé dans une cage de soupape (1), au moins un tube d'armature (7) disposé sur la cage de soupape (1), dans lequel une armature (5) est reçue de manière déplaçable axialement et sur lequel est disposé un aimant d'actionnement, et une commande manuelle d'urgence (H) selon l'une des revendications 1 à 5, qui est disposée à une extrémité du tube d'armature (7) opposée à la cage de soupape (1), dans laquelle l'élément d'actionnement (17, 27) est conçu pour un déplacement axial de l'armature (5) et l'armature est conçue pour commander l'élément de blocage.

7. Soupape hydraulique (V) selon la revendication 6, dans laquelle une garniture (9) est disposée à l'extrémité du tube d'armature (7), qui est opposé à la cage de soupape (1), et le moyen de limitation de course (11) est conçu comme un prolongement en forme de tige, lequel est logé de façon déplaçable entre l'élément d'actionnement (17, 27) et l'armature (5) dans une ouverture traversant axialement la garniture (9), de sorte que lors de l'actionnement de la commande manuelle d'urgence (H) une pression mécanique est transmise à l'armature (5) par le prolongement en forme de tige.

8. Soupape hydraulique (V) selon la revendication 7, dans laquelle le prolongement en forme de tige est conçu en forme de champignon et sans l'application d'une force extérieure se met en prise de façon étanche avec un siège formant l'extrémité d'actionnement sur la garniture (9), dans laquelle le prolongement en forme de tige présente sur la tête en forme de champignon une surface de butée (12) pour l'armature.

9. Soupape hydraulique (V) selon la revendication 7 ou 8, dans laquelle le levier manuel (14, 24) présente une configuration en forme de S.

10. Soupape hydraulique (V) selon la revendication 9, dans laquelle le levier manuel (14, 24) présente une section, qui est par endroits parallèle à une surface de la garniture, dans laquelle est formée l'ouverture.

11. Soupape hydraulique (V) selon l'une des revendications 7 à 10 en lien avec une commande manuelle d'urgence (H) selon l'une des revendications 2 à 5, dans laquelle l'étrier en tôle (13, 23) est agencé entre la garniture (9) et le tube d'armature (7).

12. Soupape hydraulique (V) selon l'une des revendications 6 à 11, dans laquelle la soupape hydraulique (V) peut être actionnée directement par le au moins un aimant d'actionnement ou pilotée par pression.

13. Soupape hydraulique (V) selon l'une des revendications 6 à 12, dans laquelle l'élément d'actionnement (17, 27) dépasse d'un matériau non magnétique.
